# EUROPÄISCHE PATENTSCHRIFT

(11) **EP 3 696 437 B1**
(45) Veröffentlichungstag und Bekanntmachung des Hinweises auf die Patenterteilung: **05.04.2023**
(21) Anmeldenummer: 20156806.0
(22) Anmeldetag: 12.02.2020
(51) Int. Cl.: F16D 65/12, F16D 65/18

(54) **BREMSELEMENT FÜR E-ACHSEN-MODUL**
BRAKE ELEMENT FOR E-AXIS MODULE
ÉLÉMENT DE FREIN POUR UN MODULE AXE E

(30) Priorität: 14.02.2019 DE 102019201989
(43) Veröffentlichungstag der Anmeldung: 19.08.2020
(73) Patentinhaber: Robert Bosch GmbH, 70442 Stuttgart (DE)
(72) Erfinder: Friedrich, Thomas, 74379 Ingersheim (DE); Verhagen, Armin, 71701 Schwieberdingen (DE); Hund, Michael, 71642 Ludwigsburg (DE); Boros, Laszlo, 71636 Ludwigsburg (DE)

(56) Entgegenhaltungen:
- WO-A1-03/058089
- WO-A1-2010/089047
- US-A- 3 398 822
- US-A- 5 535 870
- US-A1- 2017 363 161

## Beschreibung

### Technisches Gebiet

Die Erfindung bezieht sich auf ein Bremselement für ein E-Achsen-Modul, mit mindestens einer in dieses integrierten E-Maschine, wobei ein Gehäuse des E-Achsen-Moduls ein Getriebe sowie mindestens eine Bremse umfasst. Des Weiteren bezieht sich die Erfindung auf die Verwendung des Bremselements in einem Gehäuse eines Getriebes für ein E-Achsen-Modul.

### Stand der Technik

Bei elektrifizierten Antriebssträngen für Fahrzeuge sind elektrische Achsen, mindestens eine E-Maschine, ein Getriebe sowie eine Steuerelektronik vorgesehen. Damit werden nicht nur die Antriebsfunktionen abgedeckt, sondern auch zum Teil die Bremsfunktionen. Beispielsweise erfolgt bei einem "One-Pedal-Drive" beim Loslassen des Fahrpedals ein Abbremsen des Fahrzeugs über die E-Maschine bis in den Stillstand. Ferner besteht die Möglichkeit, das Fahrzeug auf leichten Steigungen beziehungsweise Gefälleabschnitten festzuhalten, ohne dass es zu einer Betätigung des Bremspedals des Fahrzeugs kommt. Obwohl ein Teil der Bremsfunktion durch den elektrischen Antrieb abgedeckt wird, gibt es zwei getrennte Systeme, sowohl für den Antrieb, als auch für die Bremse. Diese umfassen jeweils eigene elektrische Steuergeräte sowie eigene Konzepte für die Montage, das Thermo-Management, den Service, die Diagnose sowie die Stromversorgung und die Sensorik. Sogar für den Fall, dass beide Systeme von ein und demselben Lieferanten stammen, werden diese getrennt in Zusammenarbeit mit dem Fahrzeughersteller (OEM) in ein Fahrzeuggesamtkonzept integriert. Die eingesetzten Entwicklungsumgebungen sind dabei jedoch höchst unterschiedlich. Eine abgesicherte Kommunikation zwischen System und Steuergeräten ist jedoch zwingend notwendig. Dabei können längere Signallaufzeiten negative Auswirkungen auf verteilt aufgebaute Funktionen haben, so zum Beispiel eine Stabilisierung durch Motor- und Bremseingriffe oder eine Bilanzierung zwischen Rekuperation und Reibbremsen.

Bei heutigen Fahrzeugen umfassen die Bremssysteme offene luftgekühlte Reibelemente, die meist direkt an der Felge eines Rads des Fahrzeugs aufgenommen sind. Dadurch kommt es aufgrund auftretender Umwelteinflüsse, beispielsweise Korrosion, und in Anbetracht des Umstands, dass die Bremsen aufgrund der Rekuperation kaum verwendet werden vor, dass derartige Reibelemente eine verminderte Bremswirkung gerade im Notfall aufweisen können, was auf Korrosionserscheinungen zurückzuführen ist. Bei offenen luftgekühlten Reibelementen kommt es zu einer Wasserfilmbildung bei Regen, sodass auch hierdurch eine verminderte Bremswirkung entstehen kann.

Des Weiteren ist darauf hinzuweisen, dass das Thermo-Management derartiger offener luftgekühlter Reibelemente dadurch charakterisiert ist, dass Reibwärme stets verloren geht, auch wenn diese für eine Batterieheizung oder eine Klimaanlage, beispielsweise zur Innenraumtemperierung des Fahrzeugs anderweitig eingesetzt werden könnte. Es besteht kaum eine Möglichkeit, die entstehende Reibwärme in ein gemeinsames Thermo-Management einzubinden. Aufgrund der offenen Bauweise derartiger Bremssysteme kann die Wärmekapazität benachbarter Bauteile nicht oder nur unzureichend ausgenutzt werden. Eine kurze scharfe Notbremsung würde beispielsweise alleine von der Bremsscheibe aufgenommen, sodass entstehende Abwärme über Luftkonvektion beziehungsweise Strahlung innerhalb von Sekunden vernachlässigbar wäre. Des Weiteren ist bei offenen luftgekühlten Reibelementen eine Implementierung einer zusätzlichen Parkbremse durch eine eigene Aktuierung notwendig, da die Betriebsbremse bei abgestelltem Fahrzeug unzuverlässig sein kann oder deren Zuverlässigkeit allein nicht ausreichend ist.

In Bezug auf die bestehenden luftgekühlten Bremssysteme an Fahrzeugen ist des Weiteren festzuhalten, dass die Masse der Reibbremse auch durch ihre Mindest-Wärmekapazität vorgegeben ist. Der Raumbedarf sowie der Durchmesser einer Reibbremse sind relativ hoch, weil das Bremsmoment direkt am abzubremsenden Rad ohne eine Übersetzung erzeugt wird und auch dort abgestützt werden muss. US5535870A beschreibt eine konventionelle nasse Scheibenbremse/Kupplung mit mehreren Scheiben, wo die Scheiben unterschiedliche Reibungskoeffizienten innerhalb der Scheibenstapel haben.

EP1 258 647 A1 bezieht sich auf eine Bremsscheibe für ein Fahrzeug sowie ein Verfahren zu deren Herstellung. Die Bremsschreibe umfasst einen Grundkörper aus einem metallischen Werkstoff, insbesondere Grauguss, welcher wenigstens eine Reibfläche mit einer Beschichtung aus einem Material mit einem hohen Reibwert aufweist. In einer Ausführungsform weisen beide Seiten der Bremsscheibe jeweils eine Reibfläche mit einer Beschichtung auf. Die Beschichtung kann beispielsweise aus AL₂O₃, Diamant, einem keramischen Material oder einem Werkstoff vergleichbarer Härte mit ähnlichen Reibwerten hergestellt sein.

DE 10 2008 053 637 B4 offenbart einen Reibring einer innenbelüfteten Bremsscheibe. In einer Ausführungsvariante weisen beide Seiten des Reibrings jeweils eine Reibfläche auf. Zur Verbesserung der Reibungseigenschaften der Reibflächen ist auf den Reibflächen jeweils eine Beschichtung aufgebracht. Es wird offenbart, dass der Grundkörper des Reibrings aus einer Aluminiumlegierung gefertigt sein kann. In diesem Falle ist die Verwendung des Reibrings erst in Kombination mit einer Beschichtung möglich, da der Reibwert des Aluminiummaterials in der Regel gering ist.

DE 10 2015 122 200 A1 bezieht sich auf eine Hochstrom-Bremse mit verbesserter Gegenreibfläche aufgrund einer Laserbearbeitung derselben. Gemäß dieser Lösung werden metallische Scheiben einer Hochstrom-Bremse als Gegenreibflächen eingesetzt. Gemäß dieser Lösung werden Oberflächenrauigkeiten durch Erhebungen und Vertiefungen erzeugt, die zu einem erhöhten Reibbeiwert einer Hochstrom-Bremse führen. Die Oberflächenmodifikation und die Gestaltung der Oberflächenstruktur erfolgen gemäß dieser Lösung durch den Einsatz eines Lasers.

### Darstellung der Erfindung

Erfindungsgemäß wird vorgeschlagen, eine integrierte Bremse eines E-Achsen-Moduls an einem Fahrzeug mit mindestens einer E-Maschine und mit einem Getriebe so auszuführen, dass Bremselemente der integrierten Bremse Reibbeläge aufweist, die voneinander verschiedene Reibwerte µ₁, µ₂ aufweisen.

Durch die erfindungsgemäß vorgeschlagene Lösung wird ein asymmetrisch ausgebildeter Bremsrotor geschaffen, der als Bremselement der integrierten Bremse dient. Der asymmetrisch ausgebildete Bremsrotor weist auf der dem Bremsaktuator zugewandten Seite einen niedrigeren Reibwert auf als auf der einer gehäuseseitig angeordneten Druckplatte gegenüber liegenden Seite. Dies hat einen positiven Einfluss auf die Wärmeableitung, da bei einer gleichermaßen über beide Seiten des Bremselements erfolgenden Wärmeabgabe eine thermische Belastung des Bremsaktuators auftreten würde, was zusätzliche Kosten hinsichtlich dessen Wärmeabschirmung zur Folge hätte. Durch die erfindungsgemäß vorgeschlagene Lösung kann die Wärmeabfuhr so gestaltet werden, dass diese in die Gehäusestruktur des E-Achsen-Moduls abgeleitet wird und nur zu einem geringen Teil auf den Bremsaktuator einwirkt.

Der erfindungsgemäß vorgeschlagenen Lösung weiter folgend, wirkt das als Bremsrotor dienende Bremselement der integrierten Bremse mit einer ersten gehäuseseitigen Druckplatte und einer zweiten aktorseitigen Druckplatte zusammen.

Der erfindungsgemäß vorgeschlagenen Lösung weiter folgend, gibt die erste gehäuseseitig stationär angeordnete Druckplatte die entstehende Reibwärme an eine mit Kühlfluidkanälen versehene Gehäusewand ab. Durch diese Lösung kann auf Seiten der ersten gehäuseseitig stationär angeordneten Druckplatte eine erhöhte Wärmeabfuhr erreicht werden.

Die erfindungsgemäß vorgeschlagene integrierte Bremse zeichnet sich dadurch aus, dass eine zweite aktorseitig angeordnete Druckplatte einem Bremsaktuator gegenüber liegt, und in axialer Richtung ein axiales Lüftungsspiel von wenigen Zehnteln Millimetern aufweist.

Der erfindungsgemäß vorgeschlagenen Lösung weiter folgend, sind die Reibbeläge des Bremselements als Sinterbeläge oder als organische, keramische Reibbeläge oder auch als DLC(Diamond like carbon)-Beschichtungen ausgeführt.

Bei der erfindungsgemäß vorgeschlagenen integrierten Bremse weist ein erster Reibbelag auf einer dem Bremsaktuator zugewandten Seite des Bremselements einen niedrigeren Reibwert µ₁ auf, bezogen auf einen höheren Reibwert µ₂ des zweiten Reibbelags auf der der Gehäusewand zugewandten Seite des Bremselements. Durch die gewählten Reibwerte µ₁ in Bezug auf den ersten Reibbelag beziehungsweise µ₂ in Bezug auf den zweiten Reibbelag kann eine asymmetrische Abfuhr der Reibwärme gewährleistet werden, sodass der größte Teil der entstehenden Reibwärme in die Gehäusestruktur eines E-Achsen-Moduls eingeleitet werden kann, die durch Kühlfluid-Kanäle in eine KühlfluidFührung eingebunden ist.

Bei der erfindungsgemäß vorgeschlagenen Lösung weist der erste Reibbelag, der dem Bremsaktuator zugewandt ist, einen niedrigen SiO₂-Anteil auf, verglichen mit dem SiOj-Anteil des zweiten Reibbelags, der der Gehäusewand gegenüberliegt. In einer weiteren Ausführungsmöglichkeit der erfindungsgemäß vorgeschlagenen Lösung weist die Seite des Bremselements, die einen höheren Reibwert aufweist, auch eine größere zweite Belagdicke des zweiten Reibbelags auf, verglichen mit der ersten Belagdicke des ersten Reibbelags, die auf der dem Bremsaktuator zugewandten Seite des Bremselements ausgerichtet ist.

Die erfindungsgemäß vorgeschlagene, in ein E-Achsen-Modul integrierte Bremse, umfasst die erste Druckplatte und die zweite Druckplatte, wobei die erste Druckplatte in Bezug auf das Bremselement im Gehäuse fixiert ist und die zweite Druckplatte axial bewegbar ist. Die Gehäusewand ist durch ein oder mehrere Kühlfluid-Kanäle gekühlt, die in eine Kühlfluidführung eingebunden sind. Zwischen der zweiten axial beweglichen Druckplatte und der ersten stationär aufgenommenen Druckplatte verläuft mindestens eine Rückstellfeder; die axial bewegliche zweite Druckplatte ist zur stationär angeordneten ersten Druckplatte über mindestens eine Zentrierfeder zentriert. Die Betätigung der integrierten Bremse erfolgt entweder über einen Bremsaktuator, in den eine Parksperrenfunktion implementiert ist, oder alternativ über einen Ringaktor, mit mindestens einem axial beweglichen Aktorkolben. In einer Ausführungsvariante der erfindungsgemäß vorgeschlagenen Lösung ist die axial bewegliche zweite Druckplatte über einen als Tellerfeder dargestellten Energiespeicher betätigt, der in einer Ausnehmung des Gehäuses geführt ist.

Darüber hinaus bezieht sich die Erfindung auf die Veränderung der integrierten Bremse in einem E-Achsen-Modul, sei es an einer Vorderachse, sei es an einer Hinterachse eines Fahrzeugs mit mindestens einer E-Maschine.

### Vorteile der Erfindung

Durch die erfindungsgemäß vorgeschlagene Lösung wird eine in Bezug auf das Bremselement der integrierten Bremse asymmetrisch verlaufende Ableitung der Reibwärme erzielt. Die entstehende Reibwärme wird zum größten Teil aufgrund des höheren Reibwerts µ₂ des zweiten Reibbelags in die größere Struktur, insbesondere in eine von Kühlfluid-Kanälen durchzogene Gehäusewand des Gehäuses des E-Achsen-Moduls abgeleitet. Auf der dem Bremsaktuator, in den eine Parksperrenfunktion implementiert sein kann, zuweisenden Seite, ist der Anteil der abgeführten Reibwärme geringer, sodass der auf dieser Seite des Bremselements angeordnete Bremsaktuator einer geringeren thermischen Belastung ausgesetzt ist. Dadurch können Abschirmmaßnahmen in Bezug auf den Bremsaktuator eingespart werden, da durch die erfindungsgemäß vorgeschlagene Lösung eine gerichtete Abfuhr der Wärme in Richtung der Gehäusestruktur möglich ist. Durch die erfindungsgemäß vorgeschlagene Lösung kann die dem Bremsaktuator zuweisende zweite Druckplatte hinsichtlich ihrer Baugröße analog zur ersten Druckplatte ausgebildet werden. Beide Druckplatten können mit nahezu identischen Wärmekapazitäten ausgelegt werden.

Insbesondere können der erste Reibbelag und der zweite Reibbelag am Bremselement aus der Sintermetall-Schicht ausgebildet werden. Die unterschiedlichen Reibwerte µ₁ in Bezug auf den ersten Reibbelag und µ₂ in Bezug auf den zweiten Reibbelag können über unterschiedliche Materialmischungen im Sintermetall, insbesondere über die Steuerung des SiO₂-Anteils beeinflusst werden. Hinsichtlich der Dauerhaltbarkeit des als Bremsrotor dienenden Bremselements der erfindungsgemäß vorgeschlagenen integrierten Lösung, kann auf der Seite des Bremselements, die den zweiten Reibbelag mit dem höheren Reibwert µ₂ aufweist auch eine größere Belagdicke gewählt werden. Bei dieser alternativen Ausführungsmöglichkeit der erfindungsgemäß vorgeschlagenen Lösung, nutzt sich das als Bremsrotor ausgebildete Bremselement trotz unterschiedlicher Reibwerte µ₁ und µ₂ im Wesentlichen gleichmäßig ab.

### Kurze Beschreibung der Zeichnungen

Anhand der Zeichnung wird die Erfindung nachstehend eingehender beschrieben.

Es zeigt:
- Figur 1: eine Schnittdarstellung durch ein Gehäuse mit einer E-Maschine, einer integrierten Bremse sowie eines als Steuerradstufe ausgebildeten Getriebes,
- Figur 2: eine weitere Ausführungsmöglichkeit eines Gehäuses eines E-Achsen-Moduls,
- Figur 3: eine dritte Ausführungsvariante eines Gehäuses mit einem Getriebe und mindestens einer E-Maschine, einem Differential und diesem zugeordnete abtriebsseitige integrierte Bremsen,
- Figur 4.1: eine Darstellung des Bremselements der integrierten Bremse,
- Figur 4.2: eine alternative Ausführungsmöglichkeit des Bremselements für die integrierte Bremse,
- Figur 5: ein als Bremsrotor ausgebildetes Bremselement mit diskontinuierlichem Umfang und
- Figur 6: eine schematische Darstellung eines E-Achsen-Moduls für ein Fahrzeug.

### Ausführungsformen der Erfindung

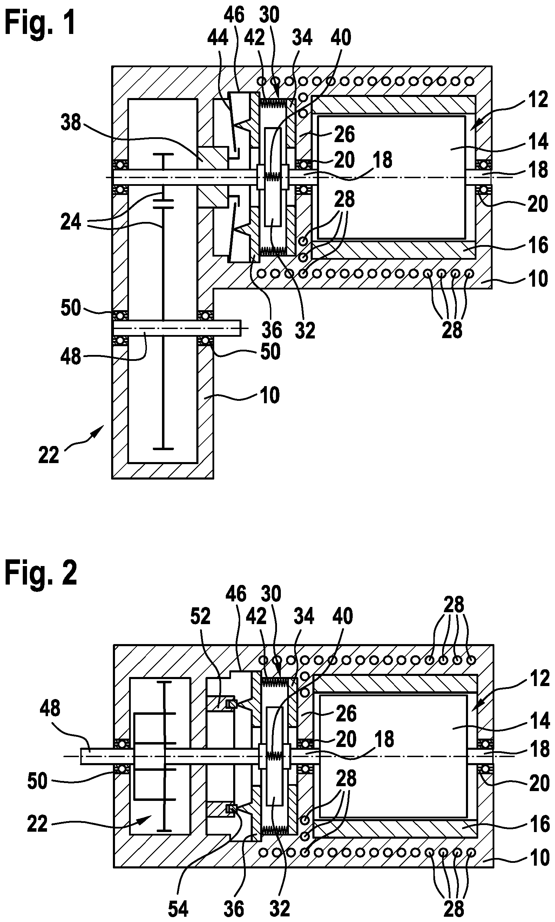

Der Darstellung gemäß Figur 1 ist ein Gehäuse 10 zu entnehmen, welches eine E-Maschine 12 aufweist. Die E-Maschine 12 umfasst einen Rotor 14, der auf einer Rotorwelle 18 gelagert ist. Die Rotorwelle 18 ist im Gehäuse 10 in Rotorwellenlagern 20 drehbar aufgenommen. Der Rotor 14 der E-Maschine 12 ist von einem im Gehäuse 10 drehfest angeordneten Stator 16 umgeben. Auf der Rotorwelle 18 befindet sich ein Bremselement 32 einer in das Gehäuse 10 integrierten Bremse 30. Darüber hinaus ist im Gehäuse 10 ein Getriebe 22 angeordnet, welches in der in Figur 1 dargestellten Ausführungsvariante als Stirnradstufe 24 ausgeführt ist.

Das Gehäuse 10 umfasst eine Gehäusewand 26. In der Gehäusewand 26 verlaufen Kühlfluidkanäle 28, die sich auch in dem Teil des Gehäuses 10 erstrecken, welches den in diesem stationär angeordneten Rotor 14 der E-Maschine 12 umschließt, sodass dieser ebenfalls eine Kühlung erfährt.

Aus der Darstellung gemäß Figur 1 geht hervor, dass sich die integrierte Bremse 30 zwischen der E-Maschine 12 und dem Getriebe 22 im Inneren des Gehäuses 10 befindet. Das als Bremsrotor ausgebildete Bremselement 32 wirkt mit einer stationär im Gehäuse 10 angeordneten ersten gehäuseseitigen Druckplatte 34 zusammen. Diese stützt sich an der Gehäusewand 26 des Gehäuses 10 ab. Da die Gehäusewand 26 von Kühlfluidkanälen 28 durchzogen ist, kann über die erste gehäuseseitige Druckplatte 34 eine effektive Wärmeabfuhr der beim Bremsvorgang erzeugten Reibwärme der integrierten Bremse 30 vorgenommen werden. Des Weiteren wirkt das Bremselement 32 mit einer in Axialrichtung beweglichen zweiten Druckplatte 36 zusammen, welche einem Bremsaktuator 38, der eine Parkbremsenfunktion aufweisen kann, gegenüberliegt. Die zweite Druckplatte 36, die dem Bremsaktuator 38 gegenüber liegt, ist axial beweglich und weist in Axialrichtung gesehen ein Lüftspiel von wenigen Zehnteln Millimetern auf.

Aus der Darstellung gemäß Figur 1 geht hervor, dass zwischen der ersten Druckplatte 34 und der zweiten Druckplatte 36 eine Zentrierfeder 40 verläuft, welche die axial bewegliche zweite Druckplatte 36 in Bezug auf die im Gehäuse 10 stationär angeordnete erste Druckplatte 34 zentriert. Zwischen den beiden Druckplatten 34, beziehungsweise 36 erstreckt sich mindestens eine Rückstellfeder 42, die bei nicht betätigtem Bremsaktuator 38 die beiden Druckplatten 34, 36 voneinander abstellt, sodass das als Bremsrotor dienende Bremselement 32 frei rotiert.

In Figur 1 ist eine Ausführungsvariante dargestellt, bei der zwischen dem Bremsaktuator 38 und der zweiten Druckplatte 36 ein Energiespeicher 44 in Form einer Tellerfeder oder eines Tellerfederpakets ausführt ist. Diese sind in einer Ausnehmung 46 im Gehäuse 10 geführt. Über die Rotorwelle 18 wird das Getriebe 22, hier ausgebildet als Stirnradstufe 24, angetrieben, welches eine Ausgangswelle 48 antreibt, die in Wellenlagern 50 drehbar im Gehäuse 10 gemäß der Darstellung in Figur 1 aufgenommen ist.

Figur 2 zeigt eine weitere Ausführungsmöglichkeit der Anordnung der integrierten Bremse 30. Wie in Figur 1, wird in dieser Ausführungsvariante des Gehäuses 10 die Gehäusewand 26 ebenfalls durch Kühlfluidkanäle 28 gekühlt. Auch hier ist die integrierte Bremse 30 mit einem als Bremsrotor dienenden Bremselement 32 versehen. Es sind die erste stationär am Gehäuse 10 aufgenommene erste Druckplatte 34 und eine in axiale Richtung bewegbare zweite Druckplatte 36 vorgesehen. Im Unterschied zu Darstellung gemäß Figur 1 wird die zweite axial bewegliche Druckplatte 36 in der Ausführungsvariante gemäß Figur 2 über einen Ringaktor 52 betätigt, der an seinem Umfang eine Anzahl von Aktorkolben 54 aufweist, über welche die zweite axial bewegliche Druckplatte 36 gegen das Bremselement 32 der integrierten Bremse 30 angestellt werden kann, welches wiederum an die stationär im Gehäuse 10 aufgenommene erste Druckplatte 34 angestellt wird. In der Ausführungsvariante gemäß Figur 2 kann das Getriebe 22 beispielsweise als Planetenstufengetriebe ausgebildet sein, über welches die Ausgangswelle 48 angetrieben ist. Diese ist analog zur Ausgangswelle 48 gemäß der Ausführungsvariante Figur 1 im Gehäuse 10 in Wellenlagern 50 aufgenommen.

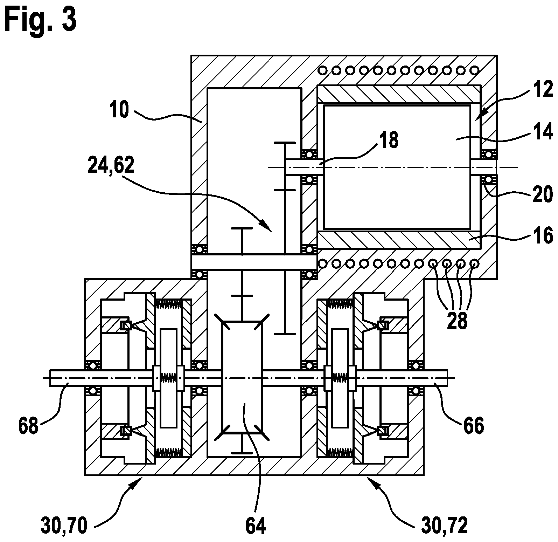

Figur 3 zeigt eine weitere Ausführungsvariante des Gehäuses 10, wobei in dieser Ausführungsvariante die E-Maschine 12, die im Gehäuse 10 aufgenommen ist, über die Rotorwelle 18 ein Zwischengetriebe 62 antreibt, hier ausgebildet als Stirnradstufe 24. Über das Zwischengetriebe 62 wird ein Differential 64 angetrieben. Das Differential 64 seinerseits treibt einen ersten Achsabtrieb 66 sowie einen zweiten Achsabtrieb 68 an, über welche in Figur 3 nicht dargestellte Räder eines Fahrzeugs angetrieben werden. Aus der Darstellung gemäß Figur 3 ergibt sich, dass zwischen dem Differential 64 und den in Figur 3 nicht dargestellten Rädern in einer ersten Bremsenposition 70 eine integrierte Bremse 30 aufgenommen ist und an einer zweiten Bremsenposition 72 ebenfalls eine integrierte Bremse 30 angeordnet ist. Über diese integrierten Bremsen 30 in den Bremsenpositionen 70, 72 wird jeweils der erste Achsabtrieb 66, beziehungsweise der zweite Achsabtrieb 68 abgebremst.

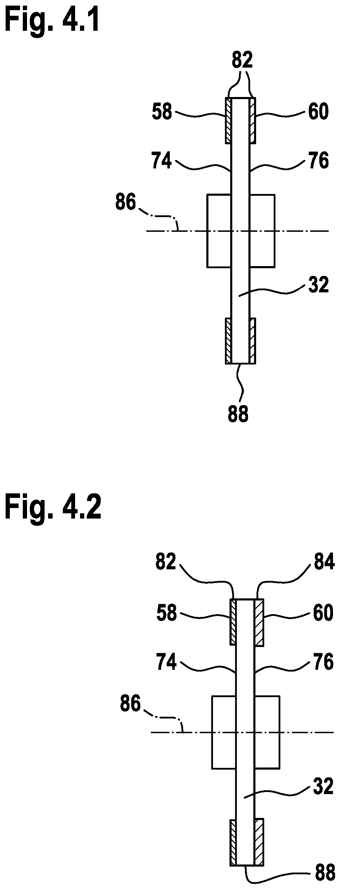

Figur 4.1 zeigt eine erste Ausführungsvariante des als Bremsrotor dienenden Bremselements 32 der integrierten Bremse 30.

Aus Figur 4.1 geht hervor, dass das Bremselement 32 um eine Rotationsachse 86 rotiert. Das in Figur 4.1 dargestellte Bremselement 32 weist einen kontinuierlichen, nicht unterbrochenen Umfang 88 auf. An seinem Außenumfang weist das Bremselement 32 gemäß der Darstellung in Figur 1 auf einer Aktorseite 74 einen ersten Reibbelag 58 auf mit einem Reibwert µ₁. Die Aktorseite 74 des Bremselements 32 liegt dem Bremsaktuator 38 gegenüber. Auf der der Gehäusewand 26 zuweisenden Seite 76 des Bremselements 32 weist dieses einen zweiten Reibbelag 60 auf, der einen Reibwert µ₂ aufweist. Die Reibbeläge 58 beziehungsweise 60 auf beiden Seiten des Bremselements 32 können beispielsweise als dünne Sintermetallschichten ausgebildet sein. In Bezug auf die Reibwerte µ₁ und µ₂ des ersten Reibbelags 58 beziehungsweise des zweiten Reibbelags 60 weist der erste Reibbelag 58 einen niedrigeren SiO₂-Anteil auf. Auf der Seite 76 des Bremselements 32, die der gekühlten Gehäusewand 26 gegenüberliegt, weist der zweite Reibbelag 60 ebenfalls ausgeführt als Sinterbelag einen höheren SiO₂-Anteil auf, da hier eine höhere Reibwärme erzeugt werden kann, die günstig über die Kühlfluidkanäle 28 der Gehäusewand 26 abgeführt werden kann. Durch die Ausgestaltung des Bremselements 32 gemäß der Darstellung in Figur 4.1 ist eine asymmetrische Verteilung der entstehenden Reibwärme möglich, wobei der größte Teil der entstehenden Reibwärme über den zweiten Reibbelag 60, der einen höheren Reibwert µ₂ aufweist, an die Gehäusestruktur d. h. die von Kühlfluidkanälen 28 durchzogene Gehäusewand 26 des Gehäuses 10 abgegeben werden kann.

Der Darstellung gemäß Figur 4.2 ist eine alternative Ausführungsmöglichkeit des Bremselements der integrierten Bremse 30 zu entnehmen.

In dieser Ausführungsvariante des Bremselements 32 weist der erste Reibbelag 58, der am Außenumfang des Bremselements 32 aufgenommen ist, eine erste Belagdicke 82 auf, während eine zweite Belagdicke 84 auf der gegenüberliegenden Seite des Bremselements 32 eine größere Dicke aufweist. Durch diese Variante, die Ausführungsvariante gemäß Figur 2, setzt sich das als Bremsrotor dienende Bremselement 32 trotz unterschiedlicher Reibwerte gleichmäßig ab. Auch hier ist gewährleistet, dass aufgrund der unterschiedlichen Reibwerte der zweite Reibbelag 60 einen höheren SiO₂-Anteil aufweist, da auf der hohen Temperaturseite des Bremselements 32 ein größerer Anteil der entstehenden Reibwärme an die Gehäusestruktur d. h. an die durch die Kühlfluidkanäle 28 gekühlte Gehäusewand 26 des Gehäuses 10 abgegeben werden kann.

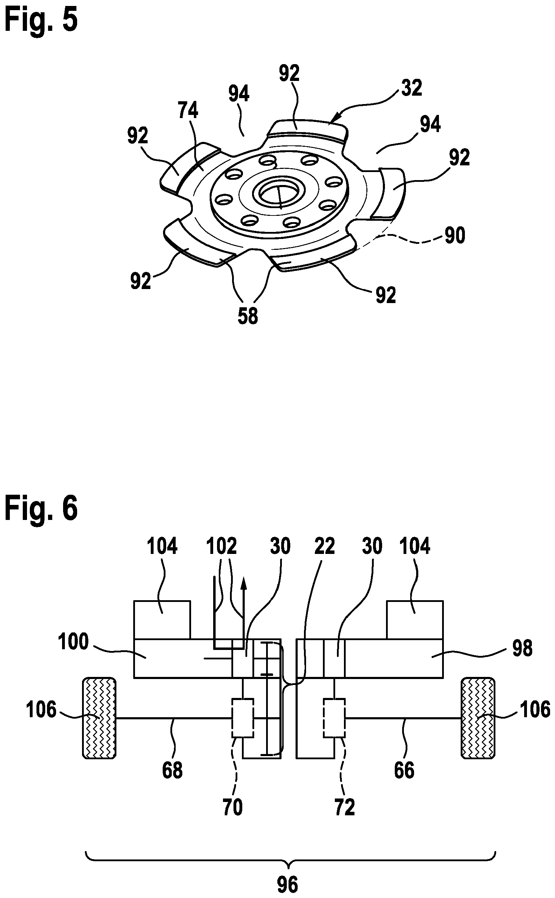

Figur 5 zeigt eine weitere Ausführungsvariante des Bremselements 32 der integrierten Bremse 30. Aus der Darstellung gemäß Figur 5 geht hervor, dass das hier dargestellte Bremselement 32 einen diskontinuierlichen Umfang 90 aufweist. In der Ausführungsvariante gemäß Figur 5 sind einzelne durch Belaglücken 94 voneinander getrennte Belagzungen 92 gleichmäßig am Umfang des Bremselements 32 angeordnet. Aus der perspektivischen Draufsicht gemäß Figur 5 geht hervor, dass sich auf der Oberseite des Materials des Bremselements 32 im Bereich der Belagzunge 92 jeweils Abschnitte mit dem ersten Reibbelag 58, der den Reibwert µ₁ aufweist, befinden. Analog verhält es sich auf der in Figur 5 nicht dargestellten Rückseite des in perspektivischer Draufsicht dargestellten Bremselements 32, wobei sich auf der in Figur 5 nicht dargestellten Rückseite des Bremselements 32 im Bereich der Belagzungen 92 Abschnitte befinden, die mit dem zweiten Reibbelag 60, der den Reibwert µ₂ aufweist, versehen sind.

Figur 6 zeigt in schematischer Darstellung ein E-Achsen-Modul.

Bei dem in Figur 6 dargestellten E-Achsen-Modul 96 sind eine erste E-Maschine 98 und eine zweite E-Maschine 100 verbaut. Diese wirken auf Getriebe 22 ein, die jeweils als Stirnradstufe 24 ausgebildet sein können. Zwischen der ersten E-Maschine 98 und dem Getriebe 22 beziehungsweise der zweiten E-Maschine 100 und dem Getriebe 22 befinden sich jeweils integrierte Bremsen 30, die das erfindungsgemäß vorgeschlagene Bremselement 32 aufweisen, das als Bremsrotor dient. Aus der Darstellung gemäß Figur 6 geht hervor, dass die hier schematisch dargestellten integrierten Bremsen 30 in eine Kühlfluidführung 102 integriert sind und eine jede der E-Maschinen 98 beziehungsweise 100 über eine Steuereinheit 104 verfügt. Die Achsabtriebe 66 beziehungsweise 68 treiben jeweils Räder 106, sei es an einer Vorderachse, sei es an einer Hinterachse, eines Fahrzeug an.

## Patentansprüche

1. Integrierte Bremse (30) eines E-Achsen-Moduls (96) eines Fahrzeugs mit mindestens einer E-Maschine (12; 98; 100) und mit einem Getriebe (22), **dadurch gekennzeichnet, dass** die integrierte Bremse (30) ein Bremselement (32) aufweist, dessen Reibbeläge (58, 60) voneinander verschiedene Reibwerte µ₁, µ₂ aufweisen;
dass die Reibbeläge (58, 60) des Bremselements (32) als Sinterbeläge, organische, keramische Reibbeläge oder als DLC(Diamond like carbon)-Beschichtungen ausgeführt sind, und
dass die erste Druckplatte (34) in Bezug auf das Bremselement (32) axial beweglich ist und sich die zweite Druckplatte (36) an der Gehäusewand (26) des Gehäuses (10) abstützt.

2. Integrierte Bremse (30) gemäß Anspruch 1, **dadurch gekennzeichnet, dass** das Bremselement (32) der integrierten Bremse (30) mit einer ersten gehäuseseitigen Druckplatte (34) und einer zweiten aktorseitigen Druckplatte (36) zusammenwirkt.

3. Die integrierte Bremse (30) gemäß Anspruch 2, **dadurch gekennzeichnet, dass** eine erste gehäuseseitige Druckplatte (34) Wärme an eine mit den Kühlfluidkanälen (28) versehene Gehäusewand (26) abgibt.

4. Integrierte Bremse (30) gemäß Anspruch 2, **dadurch gekennzeichnet, dass** eine erste gehäuseseitige Druckplatte (34) einem Bremsaktuator (38) gegenüber liegt und ein axiales Lüftspiel von einigen Zehnteln Millimetern aufweist.

5. Integrierte Bremse (30) gemäß Anspruch 1, **dadurch gekennzeichnet, dass** ein erster Reibbelag (58) auf einer einem Bremsaktuator (38) zugewandten Seite (74) des Bremselements (32) einen niedrigeren Reibwert µ₁ aufweist, bezogen auf einen höheren Reibwert µ₂ des zweiten Reibbelags (60) auf einer der Gehäusewand (26) zugewandten Seite (76) des Bremselements (32).

6. Integrierte Bremse (30) gemäß Anspruch 1, **dadurch gekennzeichnet, dass** der erste Reibbelag (58), der dem Bremsaktuator (38) zugewandt ist, einen niedrigeren SiO₂-Anteil aufweist, als der zweite Reibbelag (60), der der Gehäusewand (26) gegenüberliegt.

7. Integrierte Bremse (30) gemäß Anspruch 1, **dadurch gekennzeichnet, dass** der zweite Reibbelag (60) eine zweite Belagdicke (84) aufweist, die eine erste Belagdicke (82) des ersten Reibbelags (58) übersteigt.

8. Integrierte Bremse (30) gemäß Anspruch 1, **dadurch gekennzeichnet, dass** die Gehäusewand (26) Kühlfluidkanäle (28) aufweist, die Teil einer Kühlfluidführung (102) sind.

9. Integrierte Bremse (30) gemäß Anspruch 2, **dadurch gekennzeichnet, dass** zwischen der ersten Druckplatte (34) und der zweiten Druckplatte (36) mindestens eine Rückstellfeder (42) verläuft und die erste Druckplatte (34) zur zweiten Druckplatte (36) über eine Zentrierfeder (40) zentriert ist.

10. Integrierte Bremse (30) gemäß Anspruch 2, **dadurch gekennzeichnet, dass** diese über einen Bremsaktuator (38) mit Parksperrenfunktion oder über einen Ringaktor (52) mit mindestens einem Aktorkolben (54) betätigt ist.

11. Integrierte Bremse (30) gemäß Anspruch 10, **dadurch gekennzeichnet, dass** die erste Druckplatte (34) mit einem als Tellerfeder dargestellten Energiespeicher (44) betätigt ist, der in einer Ausnehmung (46) des Gehäuses (10) geführt ist.

12. Verwendung der integrierten Bremse (30) gemäß einem der Ansprüche 1 bis 11 in einem E-Achsen-Modul (96) an einer Vorder- oder Hinterachse eines Fahrzeugs mit mindestens einer E-Maschine (12; 98, 100)

## Claims

1. Integrated brake (30) of an E-axle module (96) of a vehicle having at least one E-machine (12; 98; 100) and having a gearbox (22), **characterized in that** the integrated brake (30) has a brake element (32), the friction linings (58, 60) of which have differing frictional values µ₁, µ₂;
**in that** the friction linings (58, 60) of the brake element (32) are embodied as sintered linings, organic, ceramic friction linings or as DLC (diamond-like carbon) coatings; and
**in that** the first pressure plate (34) is axially movable with respect to the brake element (32) and the second pressure plate (36) is supported on the housing wall (26) of the housing (10).

2. Integrated brake (30) according to Claim 1, **characterized in that** the brake element (32) of the integrated brake (30) interacts with a first housing-side pressure plate (34) and a second actuator-side pressure plate (36).

3. Integrated brake (30) according to Claim 2, **characterized in that** a first housing-side pressure plate (34) gives off heat to a housing wall (26) provided with the cooling fluid ducts (28).

4. Integrated brake (30) according to Claim 2, **characterized in that** a first housing-side pressure plate (34) is situated opposite a brake actuator (38) and has an axial clearance of a few tens of a millimetre.

5. Integrated brake (30) according to Claim 1, **characterized in that** a first friction lining (58) has, on a side (74) of the brake element (32) facing a brake actuator (38), a lower frictional value µ₁ with respect to a higher frictional value µ₂ of the second friction lining (60) on a side (76) of the brake element (32) facing the housing wall (26).

6. Integrated brake (30) according to Claim 1, **characterized in that** the first friction lining (58), which faces the brake actuator (38), has a lower SiO₂ content than the second friction lining (60), which is situated opposite the housing wall (26).

7. Integrated brake (30) according to Claim 1, **characterized in that** the second friction lining (60) has a second lining thickness (84) which exceeds a first lining thickness (82) of the first friction lining (58).

8. Integrated brake (30) according to Claim 1, **characterized in that** the housing wall (26) has cooling fluid ducts (28) which are part of a cooling fluid guide (102) .

9. Integrated brake (30) according to Claim 2, **characterized in that** at least one return spring (42) runs between the first pressure plate (34) and the second pressure plate (36), and the first pressure plate (34) is centred with respect to the second pressure plate (36) by means of a centring spring (40).

10. Integrated brake (30) according to Claim 2, **characterized in that** this is actuated by means of a brake actuator (38) with a parking lock function or by means of a ring actuator (52) with at least one actuator piston (54).

11. Integrated brake (30) according to Claim 10, **characterized in that** the first pressure plate (34) is actuated with an energy storage device (44) represented as a plate spring and guided in a recess (46) of the housing (10).

12. Use of the integrated brake (30) according to one of Claims 1 to 11 in an E-axle module (96) on a front or rear axle of a vehicle having at least one E-machine (12; 98, 100).

## Revendications

1. Frein intégré (30) d'un module d'essieu électrique (96) d'un véhicule avec au moins une machine électrique (12 ; 98 ; 100) et avec une transmission (22), **caractérisé en ce que** le frein intégré (30) présente un élément de frein (32) dont les garnitures de friction (58, 60) présentent des coefficients de friction µ₁, µ₂ différents l'un de l'autre ;
**en ce que** les garnitures de friction (58, 60) de l'élément de frein (32) sont réalisées sous forme de garnitures frittées, de garnitures de friction organiques, céramiques ou sous forme de revêtements DLC (Diamond like carbon), et
**en ce que** la première plaque de pression (34) est mobile axialement par rapport à l'élément de frein (32) et la deuxième plaque de pression (36) s'appuie sur la paroi de boîtier (26) du boîtier (10).

2. Frein intégré (30) selon la revendication 1, **caractérisé en ce que** l'élément de frein (32) du frein intégré (30) coopère avec une première plaque de pression (34) côté boîtier et une deuxième plaque de pression (36) côté actionneur.

3. Frein intégré (30) selon la revendication 2, **caractérisé en ce qu'**une première plaque de pression (34) côté boîtier transmet de la chaleur à une paroi de boîtier (26) munie des canaux de fluide de refroidissement (28).

4. Frein intégré (30) selon la revendication 2, **caractérisé en ce qu'**une première plaque de pression (34) côté boîtier est située en face d'un actionneur de frein (38) et présente un jeu d'aération axial de quelques dixièmes de millimètres.

5. Frein intégré (30) selon la revendication 1, **caractérisé en ce qu'**une première garniture de friction (58) sur un côté (74) de l'élément de frein (32) tourné vers un actionneur de frein (38) présente un coefficient de friction µ₁ inférieur par rapport à un coefficient de friction µ₂ supérieur de la deuxième garniture de friction (60) sur un côté (76) de l'élément de frein (32) tourné vers la paroi de boîtier (26).

6. Frein intégré (30) selon la revendication 1, **caractérisé en ce que** la première garniture de friction (58), qui est tournée vers l'actionneur de frein (38), présente une teneur en SiO₂ inférieure à celle de la deuxième garniture de friction (60) qui est située en face de la paroi de boîtier (26).

7. Frein intégré (30) selon la revendication 1, **caractérisé en ce que** la deuxième garniture de friction (60) présente une deuxième épaisseur de garniture (84) qui dépasse une première épaisseur de garniture (82) de la première garniture de friction (58).

8. Frein intégré (30) selon la revendication 1, **caractérisé en ce que** la paroi de boîtier (26) présente des canaux de fluide de refroidissement (28), qui font partie d'un conduit de fluide de refroidissement (102).

9. Frein intégré (30) selon la revendication 2, **caractérisé en ce qu'**au moins un ressort de rappel (42) s'étend entre la première plaque de pression (34) et la deuxième plaque de pression (36) et la première plaque de pression (34) est centrée par rapport à la deuxième plaque de pression (36) par l'intermédiaire d'un ressort de centrage (40).

10. Frein intégré (30) selon la revendication 2, **caractérisé en ce que** celui-ci est actionné par l'intermédiaire d'un actionneur de frein (38) avec une fonction de blocage de stationnement ou par l'intermédiaire d'un actionneur annulaire (52) avec au moins un piston d'actionneur (54).

11. Frein intégré (30) selon la revendication 10, **caractérisé en ce que** la première plaque de pression (34) est actionnée par un accumulateur d'énergie (44) représenté en tant que rondelle-ressort, qui est guidé dans un évidement (46) du boîtier (10).

12. Utilisation du frein intégré (30) selon l'une quelconque des revendications 1 à 11 dans un module d'essieu électrique (96) sur un essieu avant ou arrière d'un véhicule avec au moins une machine électrique (12 ; 98, 100).
